# EUROPÄISCHE PATENTANMELDUNG

(11) **EP 1 804 262 A2**
(43) Veröffentlichungstag der Anmeldung: **04.07.2007**
(21) Anmeldenummer: 06124647.6
(22) Anmeldetag: 23.11.2006
(51) Int. Cl.: H01H 19/58, B60S 1/08

(54) **Parkstellungsschalter für Wischermotoren**

(30) Priorität: 03.01.2006 DE 102006000636
(71) Anmelder: ROBERT BOSCH GMBH, 70442 Stuttgart (DE)
(72) Erfinder: Hurst, Richard, 77652, Offenburg (DE); Hawighorst, Achim, 77830, Buehlertal (DE)

(57) **Zusammenfassung**

Es wird ein Parkstellungsschalter einer Antriebsvorrichtung für einen Scheibenwischer beschrieben, der in einem Gehäuseteil des Antriebsvorrichtungsgehäuses angeordnete Kontakte und eine schwenkbare Kontaktbrücke aufweist, die über Schaltelemente an einem Antriebszahnrad der Antriebsvorrichtung zwischen zwei Positionen verstellbar ist,
wobei die Kontaktbrücke mit einem Formteil verbunden ist, das in dem Gehäuseteil radial und axial fixiert ist,
wobei das Formteil einen scheibenförmigen Bereich aufweist, der mittels wenigstens eines umlaufenden Abstandshalters in seinem äußeren Bereich drehbar gelagert ist, und
wobei der scheibenförmige Bereich durch den Abstandshalter in einem definierten Abstand zum Gehäuse gehalten wird.

## Beschreibung

Die Erfindung betrifft einen elektrischen Parkstellungsschalter für einen Wischermotor in einem Kraftfahrzeug.

Bei Antriebsmotoren für Scheibenwischer ergibt das Problem, dass beim Ausschalten der Wischerfunktion der Wischerantriebsmotor nicht sofort zum Stillstand kommen soll und demzufolge die Scheibenwischer in einer beliebigen Position auf der Windschutzscheibe stehen bleiben. Vielmehr muss sichergestellt werden, dass der Wischerantriebsmotor auch nach dem Abschalten der Scheibenwischerfunktion durch den Benutzer solange weiterläuft, bis die Wischer ihre Parkposition erreicht haben.

Dabei ist auch wichtig, dass das Verhalten des Motors, und dessen Anhalten nicht durch Einflussfaktoren wie zum Beispiel Zustand der Windschutzscheibe oder der Wischer sowie die Abnutzung der Kontakte des Wischermotors, etc. beeinflusst werden kann. Aus diesem Grunde wird das Abschalten des Wischermotors durch einen Endlagenschalter gesteuert, der unabhängig von solchen Einflussfaktoren immer das Positionieren der Wischer in ihrer genauen Parkstellung ermöglicht.

Bei solchen Endlagenschaltern ist das Schaltelement in der Regel mittelbar, z.B. über ein Zahnrad mit der Antriebswelle des Wischermotors verbunden. Mittels einer mechanischen Übersetzung wird sichergestellt, dass der Schalter erst dann umgeschaltet wird, wenn die Wischer die Parkposition tatsächlich erreicht haben. Bei einem Schaltvorgang wird eine metallische Kontaktbrücke schleifend über eine ebene Fläche geführt, in der Kontaktbahnen mit entsprechenden Schleifkontakten ausgebildet sind, und verbindet dabei die verschiedenen Kontaktbahnen elektrisch miteinander. Je nach Anzahl der beteiligten Kontaktbahnen unterscheidet man dabei zwischen einem Zweischleifersystem und einem Dreischleifersystem. Beim Zweischleifersystem ist der Parkstellungsschalter als ein Ein-/Ausschalter ausgebildet, während er beim Dreischleifersystem als ein Umschalter fungiert.

Aufgrund der mechanischen Belastung der Kontakte durch den Schleifvorgang beim Umschalten des Parkstellungsschalters, kommt es zu Abnutzungserscheinungen an den Kontaktstellen der Kontaktbrücke und den Schleifkontakten der Kontaktbahnen. Mit der Zeit kann das zu Funktionsstörungen oder gar zum Ausfall des Parkstellungsschalters führen.

Um die mechanische Belastung der Kontakte und die damit verbunden Abnutzung der Kontaktstellen zu reduzieren, wird versucht, die eine möglichst gute Führung der Kontaktbrücke zu erreichen und die Schleifwege dabei möglichst gering zu halten.

Als vorteilhaft haben sich in diesem Zusammenhang Parkstellungsschalter erwiesen, die eine schwenkbar gelagerte Kontaktbrücke aufweisen. Gegenüber einem System mit einer linear bewegten Kontaktbrücke kann der notwendige Schleifweg durch die drehbare Lagerung der Kontaktbrücke deutlich reduziert werden. Die Führung einer schwenkbar gelagerten Kontaktbrücke lässt sich darüber hinaus besonders einfach realisiert werden.

Ein solches herkömmliches System ist z.B. aus DE 19609973 bekannt. Der dort gezeigte Parkstellungsschalter weist eine auf einem Zapfen verschwenkbar gelagerte Kontaktbrücke auf. Die vorzugsweise aus Blech bestehende Kontaktbrücke wird dabei durch einen Sicherungsring auf dem Zapfen gesichert. Zur Erzeugung einer Vorspannung ist zwischen der Kontaktbrücke und dem Sicherungsring eine Feder angeordnet.

Ein solcher herkömmlicher Parkstellungsschalter, bei dem die Kontaktbrücke auf einem Zapfen gelagert ist, weist allerdings den Nachteil auf, dass aufgrund der Toleranzen bei dieser Art der Lagerung eine gleichmäßige Belastung der Kontakte nicht gewährleistet werden kann. Ferner ist der Kontaktbereich eines solchen herkömmlichen Schalters nicht ausreichend gegen das Eindringen von Fremdstoffen, wie Schmutz, Schmiere, Öl oder Wasser, geschützt. Solche Fremdstoffe können die Funktionsfähigkeit des Parkstellungsschalters jedoch stark beeinträchtigen.

Es ist daher Aufgabe der Erfindung, einen Parkstellungsschalter für einen Wischermotor bereitzustellen, der eine geringere Abnutzung der Kontaktstellen ermöglicht und daher eine höhere Lebensdauer aufweist. Diese Aufgabe wird durch einen Parkstellungsschalter mit den Merkmalen des Anspruchs 1 gelöst. Weitere Ausführungsformen der Erfindung sind in den untergeordneten Ansprüchen angegeben.

Erfindungsgemäß ist ein Parkstellungsschalter in einer Scheibenwischerantriebsvorrichtung vorgesehen, der in einem Gehäuseteil des Antriebsvorrichtungsgehäuses angeordnete Kontakte und eine schwenkbare Kontaktbrücke aufweist, wobei die Kontaktbrücke über Schaltelemente an einem Antriebszahnrad der Antriebsvorrichtung zwischen zwei Positionen verstellbar ist. Die Kontaktbrücke ist dabei fest mit einem Formteil verbunden, das in dem Gehäuseteil der Antriebsvorrichtung radial und axial fixiert. Das Formteil weist einen scheibenförmigen Bereich auf, der mittels wenigstens eines radialen Abstandhalters drehbar gelagert ist, wobei der scheibenförmige Bereich durch den Abstandshalter in einem definierten Abstand zum Gehäuse gehalten wird. Mithilfe dieser Konstruktion kann eine sehr präzise Lagerung des mit der Kontaktbrücke verbundenen Formteils realisiert werden. Durch die Lagerung des scheibenförmigen Formteils lediglich in seinen äußeren Bereichen, weist das Formteil insgesamt ein relativ geringes axiales Spiel auf. Hierdurch ist es möglich, die Auflagekraft der Kontaktbrücke sehr präzise zu bestimmen. Durch die erfindungsgemäßen Ausgestaltung des Formteils lässt sich die mechanische Belastung der Kontakte reduzieren. Da darüber hinaus mittels einer schwenkbaren Kontaktbrücke sehr geringe Schaltwege realisierbar sind, weist der erfindungsgemäßen Parkstellungsschalter eine sehr geringe Abnutzung über die Lebensdauer auf.

Vorteilhaft ist ferner, dass sich mittels des radialen Abstandhalters gleichzeitig eine Abdichtung des Parkstellungsschalters realisieren lässt. Hierdurch wird der Parkstellungsschalter wirkungsvoll abgedichtet, so dass keine Fremdstoffen in das Innere des Parkstellungsschalters eindringen können.

Ferner lässt sich der Parkstellungsschalter besonders einfach montieren, da hierzu das fertige Formteil mit der Kontaktbrücke lediglich in das entsprechende topfförmige Gehäuseteil eingesetzt werden muss. Aufgrund der radialen Abstandshalterelemente, die für den Schalter als Lager dienen, wird das Formteil beim Einsetzen in das topfförmige Gehäuseteil automatisch in die richtige Position gebracht. Daher erfordert diese Montage keine besonders hohe Präzision. Hierdurch lassen sich insbesondere die Produktionskosten senken.

Gemäß einer vorteilhaften Ausführungsform der Erfindung ist wenigstens ein Rastelement vorgesehen, mit dem das Formteil im Gehäuseteil fixiert wird. Durch den Einsatz von Rastelementen lässt sich insbesondere der Montageaufwand deutlich reduzieren.

Ein besonders vorteilhaften Ausführungsform der Erfindung sieht vor, dass der Abstandshalter als ein umlaufender Ring ausgebildet ist. Hierdurch lässt sich eine besonders optimale Lagerung des Formteils erreichen. Ferner stellt ein umlaufender Ring eine optimale Abdichtung des Parkstellungsschalters dar.

In zwei weiteren vorteilhaften Ausführungsformen der Erfindung sind die Abstandshalter als Teil des Gehäuseteils beziehungsweise des Formteils ausgebildet. Hierdurch kann die Anzahl der zu montierenden Teile reduziert wird, was zur Vereinfachung der Montage und damit zur Reduktion der Herstellungskosten führt.

Hingegen kann gemäß einer weiteren vorteilhaften Ausführungsform der Erfindung der Abstandshalter auch als ein separater Ring ausgebildet sein, der zwischen dem Formteil und dem Gehäuse der Antriebsvorrichtung angeordnet ist. Hierbei kann der Abstandhalter unabhängig von dem Gehäuseteil beziehungsweise dem Formteil optimiert werden. Somit lässt sich eine besonders gute Lagerung des Formteils erreichen.

In einer besonders vorteilhaften Ausführungsform der Erfindung ist vorgesehen, dass das Formteil in einem topfförmigen Gehäuseteil der Antriebsvorrichtung fixiert ist. Die topfförmige Ausgestaltung des Gehäuseteils erlaubt eine bessere Montage des Schalters. Ferner wird hierdurch eine Abdichtung des Inneren des Parkstellungsschalters ermöglicht.

Eine weitere Ausführungsform der Erfindung besteht darin, auf der der Kontaktbrücke abgewandten Seite der Scheibe wenigstens einen Schaltnoppen vorzusehen, der mit den Schaltelementen am Antriebszahnrad der Antriebsvorrichtung zusammenwirkt. Durch die Ausbildung eines Schaltnoppens kann auf eine besonders einfache Art ein Toleranzausgleich zwischen dem Antriebszahnrad und dem Formteil erreicht werden.

Gemäß einer weiteren vorteilhaften Ausführungsform weist das Formteil wenigsten ein Kontaktbrückenhalter auf, mit dem die Kontaktbrücke am Formteil fixiert wird. Hierdurch ist es möglich Formteil und Kontaktbrücke aus verschiedenen Materialien herzustellen und ohne aufwändige Verfahren miteinander zu verbinden.

In einer weiteren Ausführungsform der Erfindung besteht das Formteil aus einem Kunststoff. Hierbei wird vorzugsweise ein Kunststoff verwendet, der ein besonders geringes Korrosionsverhalten gegenüber den oben erwähnten Fremdstoffen zeigt und sich daher besonders gut für den erfindungsgemäßen Parkstellungsschalter eignet. Durch die Verwendung von Kunststoffen lässt sich besonders einfach eine leichtgängige Lagerung des Formteils erreichen, ohne das Schmiermittel notwendig wären. Schließlich können Kunststoffteile mittels eines bekannten Herstellungsverfahrens, wie z.B. Spritzgussverfahren, sehr einfach und kostengünstig hergestellt werden.

Im Folgenden wird die Erfindung anhand von Zeichnungen näher dargestellt. Es zeigen:
Fig. 1 einen Querschnitt durch einen erfindungsgemäßen Parkstellungsschalter mit einem in einem topfförmigen Gehäuseteil des Wischerantriebs angeordneten Formteil und einem separaten Abstandshalter;
Fig. 2 einen Querschnitt durch einen weiteren erfindungsgemäßen Parkstellungsschalter in einem Wischerantriebsgehäuse;
Fig. 3 einen Querschnitt durch ein Formteil des erfindungsgemäßen Parkstellungsschalter mit Kontaktbrücke;
Fig. 4 eine Draufsicht auf das Formteil des erfindungsgemäßen Parkstellungsschalters;
Fig. 5a bis 5c schematisch die Funktionsweise des Parkstellungsschalters in einer Zweischleiferausführung; und
Fig. 6a bis 6c schematisch die Funktionsweise des Parkstellungsschalters in einer Dreischleiferausführung.

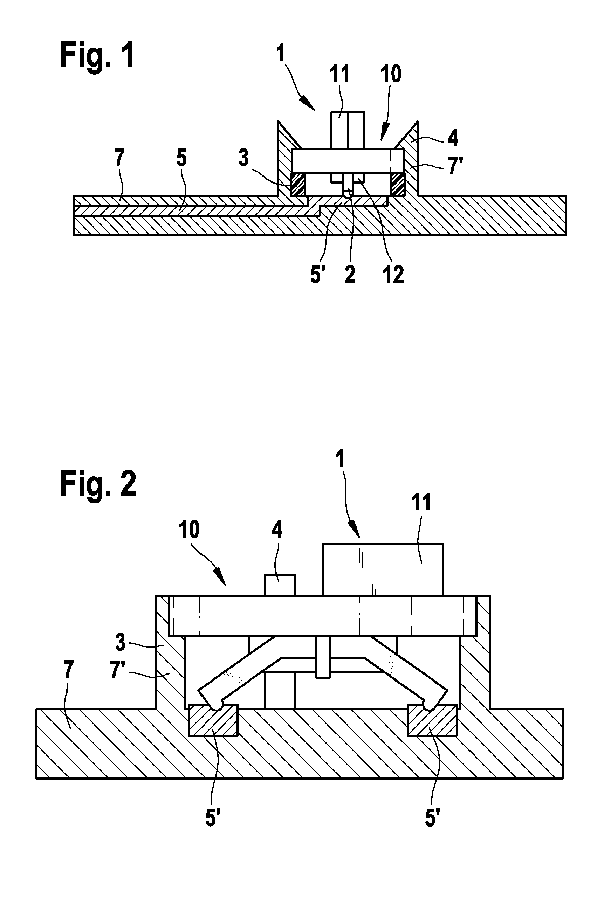

**Figur 1** verdeutlicht den Aufbau eines Parkstellungsschalters gemäß der Erfindung. Der Parkstellungsschalter besteht dabei im wesentlichen aus einem Formteil (1), das in einem Gehäuseteil (7') im Inneren des Getriebegehäuses (7) beziehungsweise eines Gehäusedeckels der Wischerantriebsvorrichtung angeordnet ist. Das Gehäuseteil (7') ist dabei vorzugsweise topfförmig ausgebildet. Das Formteil (1) besteht im wesentlichen aus einem scheibenförmigen Bereich (10), an dem ein Schaltnoppen (11) angeordnet ist. Der Schaltnoppen (11) dient zum Schalten des Parkstellungsschalters. Mit seiner Hilfe wird das Formteil (1) zwischen zwei Drehpositionen hin- und hergeschwenkt. Der Schaltnoppen (11) wird hierzu von korrespondierenden Mitnehmern (Nocken) beziehungsweise Führungen auf dem Antriebszahnrad bewegt (hier nicht gezeigt). Auf der dem Schaltnoppen (11) entgegengesetzten Seite des scheibenförmigen Bereichs (10) ist eine vorzugsweise metallische Kontaktbrücke (2) angeordnet, die je nach Position des Schalters eine elektrische Verbindung zwischen auf den Boden des Gehäuseteils (7') angeordneten Leiterbahnen (5) herstellt.

Das Formteil (1) liegt auf mindestens einem umlaufenden Abstandshalter (3) auf, der im vorliegenden Beispiel vorzugsweise als ein separater Ring ausgebildet ist. Der Abstandshalter (3) dient dazu, das Formteil (1) in einem genau definierten Abstand von Boden des Gehäuseteils (7') zu halten und erlaubt somit einen definierten Druck der Kontaktbrücke (2) auf die Kontaktbahnen (5) bzw. die zugeordnete Schleifkontakte (5') zu erzeugen.

Erfindungsgemäß bildet der Abstandhalter (3) gleichzeitig einen Teil des Lagers für das drehbar angeordnete Formteil (1). Er besteht dabei vorzugsweise aus einem geeigneten Kunststoff. Die Reibung zwischen Formteil (1) und Abstandshalter (3) kann dabei durch geeignete Auswahl der verwendeten Materialien optimiert werden.

Es ist denkbar, den Abstandshalter (3) auch als Teil des Gehäuseteils (7') oder auch als Teil des Formteils (1) vorzusehen. Ferner ist auch eine Kombination der verschiedenen Ausführungsformen des Abstandhalters möglich.

Zur Montage des Formteils (1) weist das Getriebegehäuse (7) Rastelemente (4) auf, mit denen das Formteil (1) seitlich und axialer Richtung im Gehäuseteil (7') fixiert wird. Die Rastelemente (4) sind vorzugsweise als Teil des Gehäuseteils (7') ausgebildet. Es ist aber auch denkbar, die axiale Sicherung z.B. über separate Sicherungselemente zu gewährleisten.

Wie in Figur 1 gezeigt ist, wird das Innere des Parkstellungsschalters durch den scheibenförmigen Bereich (10) des Formteils (1) und den umlaufenden Abstandshalter (3) vollständig umschlossen. Hierdurch wird eine effektive Abdichtung des Kontaktbereichs gegenüber eindringenden Fremdstoffen, wie z.B. Wasser, Schmutz oder Öl, erreicht. Da das Eindringen solcher Substanzen in den Kontaktbereich die elektrische Leitfähigkeit der Kontaktflächen stören und damit die Funktionsfähigkeit des Parkstellungsschalters beeinträchtigen kann, kann mithilfe dieser erfindungsgemäßen Maßnahmen wie Lebensdauer des Parkstellungsschalters verlängert werden.

**Figur 2** zeigt eine weitere Ausführungsform der Erfindung. Im Unterschied zu dem in Figur 1 gezeigten Ausführungsbeispiel sind mehrere separate Abstandshalter (3) vorgesehen, die entlang des Umfangs des scheibenförmigen Bereichs (10) angeordnet sind. Sie sind vorzugsweise als ein Teil des Getriebegehäuses (7) ausgebildet.

Das Formteil (1) besteht vorzugsweise aus einem Kunststoffteil, in dem eine metallische Kontaktbrücke (2) fixiert ist. Es weist im wesentlichen einen scheibenförmigen Bereich (10), einem auf dem scheibenförmigen Bereich (10) angeordneten Schaltnoppen (11) und ein auf der Unterseite des scheibenförmigen Bereichs (10) angeordneter Kontaktbrückenhalter (12) auf. Der scheibenförmige Bereich (10) ist kreisförmig ausgebildet. Der Kontaktbrückenhalter (12) besteht im wesentlichen aus Kunststoffbrücken, mit denen die Kontaktbrücke (2) am scheibenförmigen Bereich (10) des Formteils (1) befestigt ist.

Der scheibenförmigen Bereich (10) ruht auf Ausnehmungen der Abstandshalter (3) und wird von den Abstandshaltern (3) auch seitlich fixiert. Zu axialen Fixierung des Formteils (1) dient mindestens eine Rastelement (4), das als ein Teil eines Abstandhalters (3) oder als ein separates Element ausgebildet sein kann.

Um eine stabile Auflagefläche für das Formteil (1) zu gewährleisten, ist es vorteilhaft die Abstandshalter (3) entlang eines möglichst großen Teils des Umfangs des scheibenförmigen Bereichs (10) auszubilden oder eine entsprechend große Anzahl der Abstandshalter (3) vorzusehen.

Um jedoch eine Abdichtung des Kontaktbereichs zu erreichen, ist es vorteilhaft anstatt der separaten Abstandshalter (3) einen geschlossenen Abstandshalterring vorzusehen.

Wie in Figur 2 gezeigt ist, stellt die Kontaktbrücke (2) eine elektrische Verbindung zwischen zwei Leiterbahnen (5) her. Der von der Kontaktbrücke (2) auf die Leiterbahnen (5) ausgeübte Druck lässt sich mithilfe der Abstandshalter (3) genau definieren. Da das Formteil im äußeren Bereich des scheibenförmigen Bereichs (10) gelagert ist, fällt das Spiel zwischen Kontaktbrücke (2) und den Leiterbahnen (5) deutlich geringer aus, als bei den herkömmlichen, auf Zapfen gelagerten Kontaktbrücken. Hierdurch kann die Belastung der Schleifkontakte deutlich reduziert werden.

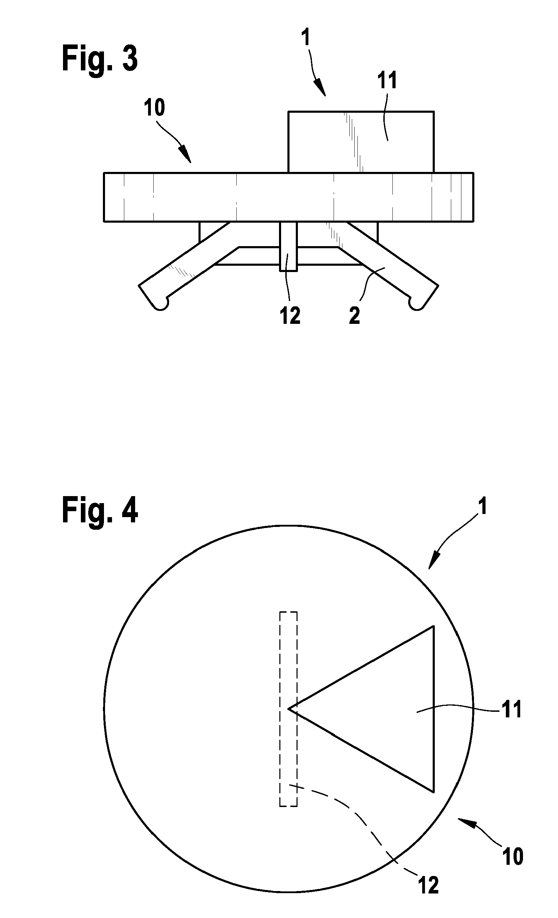

**Figur 3** zeigt eine Seitenansicht des Formteils (1) aus Figur 2. Das Formteil (1) wird vorzugsweise einstückig aus einem Kunststoff mit einem gängigen Verfahren, wie z. B. dem Kunststoff-Spritzgussverfahren hergestellt. Im vorliegenden Beispiel sind Formteil (1) und Kontaktbrücke (2) aus verschiedenen Materialien gebildet. Grundsätzlich ist es jedoch auch denkbar, die Kontaktbrücke (2) und das Formteil (1) einstückig aus demselben Material herzustellen. Hierbei käme eine Ausführung aus einem Metall oder einem anderen elektrisch leitenden Material in Frage.

**Figur 4** zeigt eine Draufsicht auf das Formteil (1) aus Figur 3. Der scheibenförmige Bereich (10) weist einen kreisförmigen Grundriss auf. Auf der Oberseite des scheibenförmigen Bereichs (10) ist der Schaltnoppen (11) angeordnet. Im vorliegenden Beispiel weist er einen Grundriss in Form eines gleichschenkligen Dreiecks auf, wobei die von den beiden gleichlangen Schenkeln eingeschlossene Ecke des Dreiecks vorzugsweise im Mittelpunkt des kreisförmigen Grundrisses des Formteils (1) angeordnet ist. Je nach Anwendung kann die Form, Größe und Anordnung des Schaltnoppens (11) jedoch variieren. Es ist auch denkbar, mehr als einen Schaltnoppen (11) auf der Oberseite des Formteils (1) vorzusehen.

Der auf der dem Schaltnoppen (11) gegenüberliegenden Seite des scheibenförmigen Bereichs (10) angeordnete Kontaktbrückenhalter (12) für die Kontaktbrücke (2) ist in Figur 4 zur Verdeutlichung durch einen gestrichelten Umriss angedeutet.

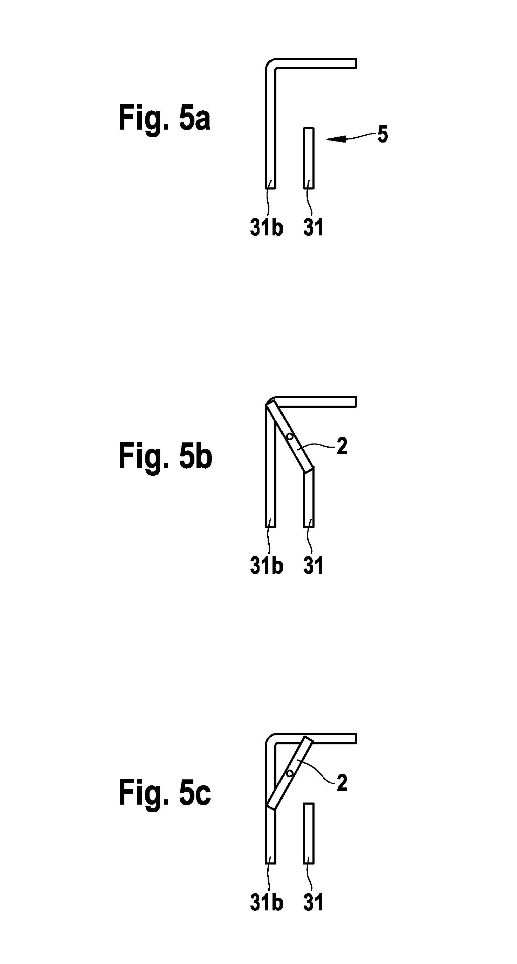

Die **Figuren 5a bis 5c** verdeutlichen die Funktionsweise des erfindungsgemäßen Parkstellungsschalters in einer Zweischleiferausführung. Dabei zeigt Figur 5a das Layout der Leiterbahnen (5), die im Inneren des Parkstellungsschalters ausgebildet sind. In einem Zweischleifersystem agiert der Parkstellungsschalter als ein Ein-/Ausschalter, der eine elektrische Verbindung zwischen den beiden Leiterbahnen (31,31b) erzeugt beziehungsweise die elektrische Verbindung wieder trennt. Wie in Figur 5b gezeigt ist, verbindet die Kontaktbrücke (2) in der "Ein"-Position die Signalleitung (31b) und die Masseleitung (31) elektrisch miteinander. Die Kontaktbrücke (2) funktioniert dabei wie eine Wippe, die zwischen zwei Positionen hin- und herschaltet. Beim Schwenken der Kontaktbrücke (2) in die "Aus"-Position wird die elektrische Verbindung zwischen den beiden Leitungen (31, 31b) wieder getrennt.

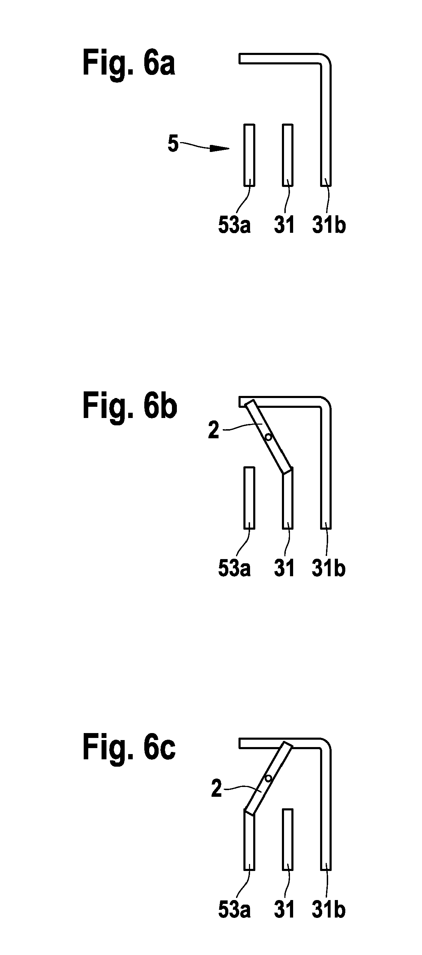

Schließlich zeigen **Figuren 6a bis 6c** des erfindungsgemäßen Parkstellungsschalters in einer Dreischleiferausführung. Im Unterschied zum Zweischleifersystem sind hierbei drei Leiterbahnen (31,31b,53a) im Inneren des Parkstellungsschalters angeordnet. Dies ist in Figur 5a gezeigt. Bei dem Dreischleifersystem agiert der Parkstellungsschalter als ein Umschalter, wobei die Kontaktbrücke (2) je nach Position die Signalleitung (31b) entweder mit der Masseleitung (31) oder mit der Versorgungsleitungen (53a) verbindet.

Die in den Ansprüchen, der Beschreibung und den Zeichnungen offenbarten Merkmale der Erfindung können sowohl einzeln als auch in Kombination für die Erfindung wesentlich sein.

## Patentansprüche

1. Parkstellungsschalter einer Antriebsvorrichtung für einen Scheibenwischer mit in einem Gehäuseteil (7') des Antriebsvorrichtungsgehäuses (7) angeordneten Kontakten (5') und einer schwenkbaren Kontaktbrücke (2), die über Schaltelemente an einem Antriebszahnrad der Antriebsvorrichtung zwischen zwei Positionen verstellbar ist,
**dadurch gekennzeichnet,**
**dass** die Kontaktbrücke (2) mit einem Formteil (1) verbunden ist, das in dem Gehäuseteil (7') radial und axial fixiert ist,
wobei das Formteil (1) einen scheibenförmigen Bereich (10) aufweist, der mittels wenigstens eines umlaufenden Abstandshalters (3) in seinem äußeren Bereich drehbar gelagert ist, und
wobei der scheibenförmige Bereich (10) durch den Abstandshalter (3) in einem definierten Abstand zum Gehäuse (7) gehalten wird.

2. Antriebsvorrichtung nach Anspruch 1,
**dadurch gekennzeichnet,**
**dass** wenigstens ein Rastelement (4) vorgesehen ist, mit dem das Formteil (1) im Gehäuseteil (7') radial und/oder axial fixiert wird.

3. Antriebsvorrichtung nach Anspruch 1 oder 2,
**dadurch gekennzeichnet,**
**dass** der Abstandshalter (3) als ein umlaufender Ring ausgebildet ist.

4. Antriebsvorrichtung nach einem der vorhergehenden Ansprüche,
**dadurch gekennzeichnet,**
**dass** der Abstandshalter (3) Teil des Gehäuses (7) ist.

5. Antriebsvorrichtung nach einem der Ansprüche 1 bis 3,
**dadurch gekennzeichnet,**
**dass** der Abstandshalter (3) Teil des Formteils (1) ist.

6. Antriebsvorrichtung nach einem der Ansprüche 1 bis 3,
**dadurch gekennzeichnet,**
**dass** der Abstandshalter (3) als ein separater Ring ausgebildet ist, der zwischen dem scheibenförmigen Bereich (10) und dem Gehäuse (7) der Antriebsvorrichtung angeordnet ist.

7. Antriebsvorrichtung nach einem der vorhergehenden Ansprüche,
**dadurch gekennzeichnet,**
**dass** das Formteil (1) in einem topfförmigen Gehäuseteil (7') fixiert ist.

8. Antriebsvorrichtung nach einem der vorhergehenden Ansprüche,
**dadurch gekennzeichnet,**
**dass** auf der der Kontaktbrücke (2) abgewandten Seite des Formteils (1) wenigstens ein Schaltnoppen (11) angeordnet ist, der mit den Schaltelementen an dem Antriebszahnrad der Antriebsvorrichtung zusammenwirkt.

9. Antriebsvorrichtung nach einem der vorhergehenden Ansprüche,
**dadurch gekennzeichnet,**
**dass** das Formteil (1) wenigsten ein Kontaktbrückenhalter (12) aufweist, mit dem die Kontaktbrücke (2) am Formteil (1) befestigt ist.

10. Antriebsvorrichtung nach einem der vorhergehenden Ansprüche,
**dadurch gekennzeichnet,**
**dass** das Formteil (1) und/oder der Abstandshalter (3) aus Kunststoff besteht.
